(19) Europäisches Patentamt
European Patent Office
Office européen des brevets

(11) EP 3 556 812 A1

(12) EUROPEAN PATENT APPLICATION
published in accordance with Art. 153(4) EPC

(43) Date of publication:
**23.10.2019 Bulletin 2019/43**

(21) Application number: **17884510.3**

(22) Date of filing: **19.12.2017**

(51) Int Cl.:
***C08L 101/00*** *(2006.01)* ***C08K 3/04*** *(2006.01)*
***C08K 3/32*** *(2006.01)* ***C08K 5/3492*** *(2006.01)*
***C08L 21/00*** *(2006.01)* ***E04B 1/94*** *(2006.01)*
***E06B 5/16*** *(2006.01)*

(86) International application number:
**PCT/JP2017/045453**

(87) International publication number:
**WO 2018/117075 (28.06.2018 Gazette 2018/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **19.12.2016 JP 2016245621**

(71) Applicant: **Sekisui Chemical Co., Ltd.**
**Osaka-shi, Osaka 530-8565 (JP)**

(72) Inventors:
- **SHIMAMOTO, Michio**
**Hasuda-shi**
**Saitama 349-0198 (JP)**
- **DOHI, Akihito**
**Hasuda-shi**
**Saitama 349-0198 (JP)**

(74) Representative: **Ter Meer Steinmeister & Partner**
**Patentanwälte mbB**
**Nymphenburger Straße 4**
**80335 München (DE)**

# (54) FIRE-RESISTANT RESIN COMPOSITION AND FIRE-RESISTANT RESIN MOLDED BODY

(57) A fire-resistant resin composition comprises at least one matrix component selected from the group consisting of resins, elastomers and rubbers; a thermally expandable graphite; and at least one flame retardant selected from the group consisting of lower phosphoric acid salts and melamine derivatives.



Printed by Jouve, 75001 PARIS (FR)

## Description

### Technical Field

The present invention relates to a fire-resistant resin composition and a fire-resistant resin molded body.

### Background Art

In the field of architecture, a fire-resistant resin composition obtained by mixing a matrix resin with an inorganic material that expands when heated is used for fire prevention in building materials, such as fittings, pillars, and wall materials. Such a fire-resistant resin composition and a fire-resistant resin molded body formed from the fire-resistant resin composition expand when heated, and the combustion residue is formed into a fire-resistant, heat-insulating layer, exerting fire-resistant, heat-insulation performance.

Patent Literature (PTL) 1 discloses a fire-resistant rubber composition for a fire-resistant covering, comprising a base rubber component consisting of 30 to 60 parts by mass of liquid rubber and 40 to 70 parts by mass of butyl rubber, and comprising at least 3 to 50 parts by mass of a tackifier, 10 to 100 parts by mass of a thermally expandable graphite, 30 to 180 parts by mass of a flame retardant, 30 to 210 parts by mass of an inorganic filler, 0.1 to 10 parts by mass of a vulcanizing agent, and 0.1 to 10 parts by mass of a vulcanization accelerator, per 100 parts by mass of the base rubber component, the rubber composition being formed as unvulcanized. This fire-resistant rubber composition can contain 1 to 50 parts by mass of aluminum phosphite to improve the shape retention.

### Citation List

### Patent Literature

PTL 1: JP2009-138184A

### Summary of Invention

### Technical Problem

When a fire-resistant resin composition is used at a portion that is exposed to rain or a portion that is highly humid due to dew condensation or the like, the components in the fire-resistant resin composition would elute, possibly causing performance reduction or an appearance defect.

PTL 1 does not address water resistance.

An object of the present invention is to provide a fire-resistant resin composition that has excellent fire resistance and water resistance, and provide a fire-resistant resin molded body that is formed from the fire-resistant resin composition.

### Solution to Problem

In order to achieve the above object, the following embodiments of the present invention are provided.

Item 1. A fire-resistant resin composition comprising:

- at least one matrix component selected from the group consisting of resins, elastomers, and rubbers;
- a thermally expandable graphite; and
- at least one flame retardant selected from the group consisting of lower phosphoric acid salts and melamine derivatives.

Item 2. The fire-resistant resin composition according to Item 1, further comprising an inorganic filler.

Item 3. The fire-resistant resin composition according to Item 1 or 2, wherein the thermally expandable graphite is present in an amount of 10 to 200 parts by mass, the at least one flame retardant is present in an amount of 5 to 400 parts by mass, and the inorganic filler is present in an amount of 0 to 400 parts by mass, per 100 parts by mass of the matrix component.

Item 4. The fire-resistant resin composition according to Item 2 or 3, wherein the mass ratio of the amount of the thermally expandable graphite to the total amount of the at least one flame retardant and the inorganic filler is 1:0.5 to 1:10.

Item 5. The fire-resistant resin composition according to any one of Items 1 to 4, wherein the at least one matrix component is at least one member selected from the group consisting of polyvinyl chloride resins, chlorinated polyvinyl chloride resins, polyolefin resins, and epoxy resins.

Item 6. The fire-resistant resin composition according to any one of Items 1 to 5, comprising 25% by mass or less of a phosphorus-containing compound other than the at least one flame retardant.

Item 7. A fire-resistant resin molded body comprising the fire-resistant resin composition of any one of Items 1 to 6.

Item 8. A thermally expandable fire-resistant sheet comprising the fire-resistant resin composition of any one of Items 1 to 6.

Item 9. A fitting comprising the fire-resistant resin molded body of Item 7 or the thermally expandable fire-resistant sheet of Item 8.

Advantageous Effects of Invention

The fire-resistant resin composition according to the present invention and the fire-resistant resin molded body formed from the fire-resistant resin composition are capable of imparting excellent fire resistance and water resistance to buildings.

Brief Description of Drawings

Fig. 1 is a schematic view illustrating an example in which a thermally expandable fire-resistant sheet is applied to a door.

Description of Embodiments

The fire-resistant resin composition of the present invention comprises at least one matrix component selected from the group consisting of resins, elastomers, and rubbers; a thermally expandable graphite; and at least one flame retardant selected from the group consisting of lower phosphoric acid salts and melamine derivatives.

Examples of the matrix component include resins, elastomers, rubbers, and combinations thereof.

Examples of resins include thermoplastic resins, thermosetting resins, and combinations thereof.

Examples of thermoplastic resins include polyolefin resins, such as polypropylene resins, polyethylene resins, poly(1-)butene resins, and polypentene resins; polyester resins, such as polyethylene terephthalate; and synthetic resins, such as polystyrene resins, acrylonitrile-butadiene-styrene (ABS) resins, ethylene vinyl acetate (EVA) copolymers, polycarbonate resins, polyphenylene ether resins, (meth)acrylic resins, polyamide resins, polyvinyl chloride resins, chlorinated polyvinyl chloride resins, novolak resins, polyurethane resins, and polyisobutylene.

Examples of thermosetting resins include synthetic resins, such as polyurethane, polyisocyanate, polyisocyanurate, phenol resins, epoxy resins, urea resins, melamine resins, unsaturated polyester resins, and polyimide.

Examples of elastomers include olefin-based elastomers (TPO), styrene-based elastomers, ester-based elastomers, amide-based elastomers, vinyl chloride-based elastomers, and combinations thereof. The term "TPO" refers to a thermoplastic elastomer comprising a polyolefin, such as polyethylene and polypropylene, as a hard segment, and a rubber, such as ethylene-propylene rubber and ethylene-propylene-diene rubber, as a soft segment.

Examples of rubbers include natural rubber, isoprene rubber, butadiene rubber, 1,2-polybutadiene rubber, styrene-butadiene rubber, chloroprene rubber, nitrile rubber, butyl rubber, chlorinated butyl rubber, ethylene-propylene rubber, ethylene-propylene-diene rubber (EPDM), chlorosulfonylated polyethylene, acrylic rubber, epichlorohydrin rubber, highly vulcanized rubber, nonvulcanized rubber, silicone rubber, fluorine rubber, urethane rubber, and the like.

Each of these resins, elastomers, and rubbers may be used alone or in a combination of two or more. Resins, elastomers, and rubbers may also be used in combination.

Of these resins, elastomers, and rubbers, it is preferable to use a polyvinyl chloride resin and a chlorinated polyvinyl chloride resin in terms of fire resistance. To obtain flexibility, a polyolefin resin, TPO, or EPDM is preferable. From the viewpoint of enhancing the flame retardancy of the resin itself to improve fireproof performance, an epoxy resin is preferable.

The thermally expandable graphite is a known substance that expands when heated. The thermally expandable graphite is a graphite intercalation compound formed by subjecting a powder, such as natural flake graphite, pyrolytic graphite, or kish graphite to an acid treatment with a strong oxidizing agent. Examples of the strong oxidizing agent include inorganic acids, such as concentrated sulfuric acid, nitric acid, and selenic acid; concentrated nitric acid; perchloric acid; perchlorate; permanganate; dichromate; hydrogen peroxide; and the like. The thermally expandable graphite is a crystalline compound in which a carbon layer structure is maintained.

The thermally expandable graphite may optionally be neutralized. Specifically, the thermally expandable graphite obtained by acid treatment as described above is further neutralized with ammonia, a lower aliphatic amine, an alkali

metal compound, an alkaline earth metal compound, or the like.

The thermally expandable graphite obtained by acid treatment as described above may be further neutralized with ammonia, a lower aliphatic amine, an alkali metal compound, an alkaline earth metal compound, or the like.

The amount of the thermally expandable graphite in the fire-resistant resin composition is not particularly limited. The amount is preferably 5 to 400 parts by mass, and more preferably 10 to 200 parts by mass, per 100 parts by mass of the matrix component. To obtain expansion more suitable for preventing fire from passing through, the amount of the thermally expandable graphite is preferably 5 parts by mass or more. In terms of shape retention, the amount is preferably 400 parts by mass or less.

The grain size of the thermally expandable graphite is preferably 20 to 200 mesh. When the grain size is 200 mesh or smaller, the degree of expansion of the graphite is sufficient to obtain an expandable heat insulating layer. When the grain size is 20 mesh or greater, the dispersibility upon mixing with a resin becomes desirable, thereby ensuring desirable properties.

The at least one flame retardant selected from the group consisting of lower phosphoric acid salts and melamine derivatives is added to enhance the flame retardancy of the fire-resistant resin composition, as well as to improve the resistance to water, such as rain, dew condensation, and moisture. The addition of the flame retardant inhibits reduction in the performance of the fire-resistant resin composition when exposed to water.

The term "lower phosphoric acid salt" refers to an inorganic phosphoric acid salt that is not condensed, i.e., that is not polymerized. Examples of inorganic phosphoric acids include primary phosphoric acid, secondary phosphoric acid, tertiary phosphoric acid, metaphosphoric acid, phosphorous acid, hypophosphorous acid, and the like. Examples of salts include alkali metal salts (such as lithium salts, sodium salts, or potassium salts), alkaline-earth metal salts (such as magnesium salts, calcium salts, strontium salts, or barium salts), salts of periodic table Group 3B metals (such as aluminum salts), transition metal salts (such as titanium salts, manganese salts, iron salts, nickel salts, copper salts, zinc salts, vanadium salts, chromium salts, molybdenum salts, or tungsten salts), ammonium salts, amine salts, for example, guanidine salts or salts of triazine compounds, and the like. Metal salts are preferable. However, melamine salts are excluded. In one embodiment, the lower phosphoric acid salt comprises metal phosphate or metal phosphite, or both. The metal phosphite may be foamable. Further, metal phosphite may be used after being surface-treated with a surface-treating agent or the like so as to increase the adherence to the matrix component. Examples of such surface-treating agents include functional compounds (e.g., epoxy-based compounds, silane-based compounds, and titanate-based compounds) and the like.

Examples of metal salts of the lower phosphoric acid include aluminum primary phosphate, sodium primary phosphate, potassium primary phosphate, calcium primary phosphate, zinc primary phosphate, aluminum secondary phosphate, sodium secondary phosphate, potassium secondary phosphate, calcium secondary phosphate, zinc secondary phosphate, aluminum tertiary phosphate, sodium tertiary phosphate, potassium tertiary phosphate, calcium tertiary phosphate, zinc tertiary phosphate, aluminum phosphite, sodium phosphite, potassium phosphite, calcium phosphite, zinc phosphite, aluminum hypophosphite, sodium hypophosphite, potassium hypophosphite, calcium hypophosphite, zinc hypophosphite, aluminum metaphosphate, sodium metaphosphate, potassium metaphosphate, calcium metaphosphate, zinc metaphosphate, and the like.

The amount of the lower phosphoric acid salt is preferably 5 to 400 parts by mass, more preferably 10 to 400 parts by mass, and still more preferably 15 to 200 parts by mass, per 100 parts by mass of the matrix component. To impart sufficient flame retardancy and sufficient water resistance to the fire-resistant resin composition, the amount is preferably 5 parts by mass or more. When the amount is 400 parts by mass or less, the water resistance of the fire-resistant resin composition improves further.

Such lower phosphoric acid salts are excellent in safety and economically advantageous, and ensure greatly improved flame retardancy.

Examples of melamine derivatives include, but are not particularly limited to, nitrogen-containing cyclic compounds that contain amino groups, such as melam, melem, and melon, other than melamine; salts of nitrogen-containing cyclic compounds that contain amino groups, such as melam, melem, melon, and melamine with nitrogen-containing compounds that contain oxygen acid, organic phosphoric acid, or hydroxy; amide polyphosphate; cyclic urea compounds; melamine pyrophosphate; melamine orthophosphate; melamine polyphosphate-melam-melem double salt; melamine polymetaphosphate; melamine sulfate; melam pyrosulfate; melam organic sulfonate; melamine organic phosphate; melamine organic phosphinate; melamine cyanurate; melamine borate; and the like.

The melamine derivative is preferably at least one member selected from melamine pyrophosphate, melamine orthophosphate, melamine polyphosphate, and melamine borate to impart further enhanced flame retardancy, and in terms of easy availability.

The amount of the melamine derivative is preferably 5 to 400 parts by mass, more preferably 10 to 400 parts by mass, and still more preferably 15 to 200 parts by mass, per 100 parts by mass of the matrix component. To impart sufficient flame retardancy and sufficient water resistance to the fire-resistant resin composition, the amount is preferably 5 parts by mass or more. When the amount is 400 parts by mass or less, the water resistance of the fire-resistant resin

composition further improves.

When the fire-resistant resin composition comprises both a lower phosphoric acid salt and a melamine derivative, the total amount of the flame retardants is preferably 5 to 400 parts by mass, more preferably 10 to 400 parts by mass, and still more preferably 15 to 200 parts by mass.

The fire-resistant resin composition of the present invention may further comprise an inorganic filler. The inorganic filler increases the heat capacity and suppresses the heat transmission when an expandable heat-insulating layer is formed, and acts as an aggregate to increase the strength of the expandable heat-insulating layer. Examples of inorganic fillers include, but are not particularly limited to, metal oxides such as alumina, zinc oxide, titanium oxide, calcium oxide, magnesium oxide, iron oxide, tin oxide, antimony oxide, and ferrite; metal hydroxides, such as calcium hydroxide, magnesium hydroxide, aluminum hydroxide, and hydrotalcite; metal carboxylates, such as basic magnesium carbonate, calcium carbonate, magnesium carbonate, zinc carbonate, strontium carbonate, and barium carbonate; calcium salts, such as calcium sulfate, gypsum fiber, and calcium silicate; as well as silica, diatomaceous earth, dawsonite, barium sulfate, talc, clay, mica, montmorillonite, bentonite, activated clay, sepiolite, imogolite, sericite, glass fiber, glass bead, silica balloon, aluminum nitride, boron nitride, silicon nitride, carbon black, glaphite, carbon fiber, carbon balloon, charcoal powder, various metal powders, potassium titanate, magnesium sulfate, lead zirconium titanate, zinc stearate, calcium stearate, aluminum borate, molybdenum sulfide, silicon carbide, stainless steel fiber, zinc borate, various magnetic powders, slag fiber, fly ash, dehydrated sludge, and the like. These inorganic fillers may be used alone or in a combination of two or more.

The particle size of the inorganic filler is preferably 0.5 to 100 μm, and more preferably 1 to 50 μm. Since the dispersibility significantly influences the performance, when a small amount of an inorganic filler is added, the inorganic filler preferably has a small particle size. However, the particle size is preferably 0.5 μm or more in terms of dispersibility. When a large amount of an inorganic filler is added, the viscosity of the fire-resistant resin composition increases more as the addition of the filler increases, thereby decreasing formability. However, since the viscosity of the fire-resistant resin composition can be decreased by increasing the size of the inorganic filler particle, the inorganic filler preferably has a large particle size. However, the particle size is preferably 100 μm or less. When the particle size of the inorganic filler is 100 μm or less, the surface properties of the molded body and mechanical-physical properties of the fire-resistant resin composition further increase.

The amount of the inorganic filler in the fire-resistant resin composition is not particularly limited. The amount is preferably 0 to 400 parts by mass, per 100 parts by mass of the matrix component. In one embodiment, the amount of the inorganic filler is 5 to 400 parts by mass, per 100 parts by mass of the matrix component. To maintain mechanical physical properties, the amount of the inorganic filler is preferably 400 parts by mass or less, per 100 parts by mass of the matrix component.

The mass ratio of the amount of the thermally expandable graphite to the total amount of the flame retardant and the inorganic filler (the amount of the thermally expandable graphite:the total amount of the flame retardant and the inorganic filler) is preferably 1:0.5 to 1:10. When this mass ratio is 1:0.5 or more, sufficient fire resistance can be obtained. When this mass ratio is 1:10 or less, the mechanical physical properties improve, and sufficient strength can be obtained.

In particular, when the fire-resistant resin composition comprises the thermally expandable graphite in an amount of 10 to 200 parts by mass, the flame retardant in an amount of 5 to 400 parts by mass, and the inorganic filler in an amount of 0 to 400 parts by mass, per 100 parts by mass of the matrix component, such a fire-resistant resin composition can achieve both excellent fire resistance and water resistance.

The fire-resistant resin composition of the present invention may further comprise a phosphorus compound to increase the strength of the expandable heat-insulating layer and improve the fireproof performance. Examples of the phosphorus compound include, but are not particularly limited to, red phosphorus; various types of phosphoric esters, such as triphenyl phosphate, tricresyl phosphate, trixylenyl phosphate, cresyl diphenyl phosphate, and xylenyl diphenyl phosphate; metal phosphates, such as sodium phosphate, potassium phosphate, and magnesium phosphate; ammonium polyphosphates; compounds represented by the following formula (1); and the like. Of these, in view of fireproof performance, the phosphorus compound is preferably red phosphorus, an ammonium polyphosphate, or a compound represented by the following formula (1).

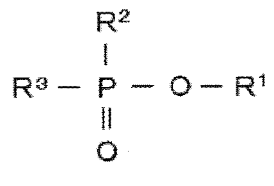

(1)

In formula (1), $R^1$ and $R^3$ are identical or different, and each represents hydrogen, linear or branched $C_{1-16}$ alkyl, or $C_{6-16}$ aryl. $R^2$ represents hydroxy, linear or branched $C_{1-16}$ alkyl, linear or branched $C_{1-16}$ alkoxyl, $C_{6-16}$ aryl, or

$C_{6-16}$ aryloxy.

Red phosphorus may be a commercially available product. Red phosphorus particles having ammonium polyphosphate resin-coated surfaces and the like are preferably used in view of moisture resistance and safety, i.e.; no spontaneous ignition occurs upon kneading.

Examples of the compounds represented by formula (1) include, but are not particularly limited to, methylphosphonic acid, dimethyl methylphosphate, diethyl methylphosphate, ethylphosphonic acid, n-propylphosphonic acid, n-butylphosphonic acid, 2-methylpropylphosphonic acid, t-butylphosphonic acid, 2,3-dimethyl-butylphosphonic acid, octylphosphonic acid, phenylphosphonic acid, dioctyl phenylphosphonate, dimethylphosphinic acid, methylethylphosphinic acid, methylpropylphosphinic acid, diethylphosphinic acid, dioctylphosphinic acid, phenylphosphinic acid, diethylphenylphosphinic acid, diphenylphosphinic acid, bis(4-methoxyphenyl)phosphinic acid, and the like. Of these, although it is expensive, t-butylphosphonic acid is preferable in terms of high flame retardancy. The above phosphorus compounds may be used alone or in a combination of two or more.

The amount of the phosphorus compound is not limited, and is preferably 0 to 50 parts by mass, per 100 parts by mass of the matrix component.

The fire-resistant resin composition of the present invention may further comprise a plasticizer.

The plasticizer is not particularly limited. For example, one or more of the following plasticizers shown as examples may be used alone or in combination:

phthalic acid ester-based plasticizers, such as di-2-ethylhexyl phthalate (DOP), di-n-octyl phthalate, diisononyl phthalate (DINP), diisodecyl phthalate (DIDP), diundecyl phthalate (DUP), and phthalic acid esters of higher alcohols having about 10 to 13 carbon atoms or mixed alcohols thereof;
aliphatic ester-based plasticizers, such as di-2-ethylhexyl adipate (DOA), diisobutyl adipate (DIBA), dibutyl adipate (DBA), di-n-octyl adipate, di-n-decyl adipate, diisodecyl adipate, di-2-ethylhexyl azelate, dibutyl sebacate, and di-2-ethylhexyl sebacate;
trimellitic acid ester-based plasticizers, such as tri-2-ethylhexyl trimellitate (TOTM), tri-n-octyl trimellitate, tridecyl trimellitate, triisodecyl trimellitate, and di-n-octyl-n-decyl trimellitate;
adipic acid ester-based plasticizers, such as di-2-ethylhexyl adipate (DOA) and diisodecyl adipate (DIDA);
sebacic acid ester-based plasticizers, such as dibutyl sebacate (DBS) and di-2-ethylhexyl sebacate (DOS);
phosphoric acid ester-based plasticizers, such as trimethyl phosphate, triethyl phosphate, tributyl phosphate, trioctyl phosphate, octyl diphenyl phosphate, tributoxyethyl phosphate, trichloroethyl phosphate, tris(2-chloropropyl)phosphate, tris(2,3-dichloropropyl)phosphate, tris(2,3-dibromopropyl)phosphate, tris(bromochloropropyl)phosphate, bis(2,3-dibromopropyl)-2,3-dichloropropyl phosphate, bis(chloropropyl)monooctyl phosphate, tris(2-ethylhexyl)phosphate, triphenyl phosphate, tricresyl phosphate (TCP), trixylenyl phosphate, cresyl diphenyl phosphate, and xylenyl diphenyl phosphate;
biphenyltetracarboxylic acid tetra alkyl ester-based plasticizers, such as 2,3,3',4'-biphenyltetracarboxylic acid tetraheptyl ester; polyester-based polymeric plasticizers;
epoxy-based plasticizers, such as epoxidized soybean oil, epoxidized linseed oil, epoxidized cottonseed oil, and liquid epoxy resin;
chlorinated paraffin;
chlorinated fatty acid esters, such as pentachlorostearic acid alkyl ester; and the like.

Of the above plasticizers, phthalic acid-based plasticizers are preferable in terms of flame retardancy and from the economic viewpoint.

When the amount of the plasticizer to be added is small, the extrusion moldability is likely to worsen. When it is large, the resulting molded body is likely to become too soft. Accordingly, the amount of the plasticizer to be added is preferably, but is not limited to, 0 to 200 parts of mass, per 100 parts by mass of the matrix component. In one embodiment, when the matrix component is a polyvinyl chloride resin or a chlorinated polyvinyl chloride resin, the amount of the plasticizer may be 20 to 200 parts by mass, per 100 parts by mass of the matrix component.

The fire-resistant resin composition may further comprise other components as long as the physical properties are not impaired. Examples include antioxidants based on phenol, amine, sulfur, or the like; metal deterioration inhibitors; antistatic agents; stabilizers; crosslinking agents; lubricants; softening agents; pigments; and the like.

In the fire-resistant resin composition of the present invention, phosphorus is preferably contained in a minimum amount in order to inhibit reduction in resistance to exposure to moisture, such as water and moisture. The fire-resistant resin composition preferably comprises 25 mass% or less of a phosphorus-containing compound, other than the at least one flame retardant selected from the group consisting of lower phosphoric acid salts and melamine derivatives.

By applying the fire-resistant resin composition comprising a mixture of the matrix component, the thermally expandable graphite, the flame retardant, and optional other components to a substrate, such as building materials of a building, and dried, a thermally expandable fire-resistant sheet having a desired thickness can be obtained. The

application is known in this technical field. The thickness of the thermally expandable fire-resistant sheet is preferably, but is not particularly limited to, 0.2 to 10 mm. When the thickness is 0.2 mm or more, the sheet exhibits heat-insulating properties. When the thickness is 10 mm or less, the handling of the sheet is good in terms of the weight.

Molding of the fire-resistant resin composition comprising a mixture of the matrix component, the thermally expandable graphite, the flame retardant, and optional other components enables the production of a fire-resistant resin molded body. Molding includes press molding, extrusion molding, and injection molding. The fire-resistant resin molded body includes packing materials, such as air-tight members, glazing channels, and gaskets, thermally expandable fire-resistant sheets, and the like. The thermally expandable fire-resistant sheet preferably has a thickness of, but is not particularly limited to, 0.2 to 10 mm.

The fire-resistant resin composition, thermally expandable fire-resistant sheet, and fire-resistant resin molded body are not particularly limited insofar as they can block heat by the expansion layer upon exposure to a high temperature such as a fire, and insofar as the expansion layer ensures a certain strength. The fire-resistant resin composition, thermally expandable fire-resistant sheet, and fire-resistant resin molded body preferably have a coefficient of expansion of 3 to 50 times after being heated for 30 minutes under a condition of 50 $kW/m^2$. When the coefficient of expansion is 3 times or more, the expansion can sufficiently fill the burned portions of the matrix component. Further, when the coefficient of expansion is 50 times or less, the strength of the expansion layer is maintained, thereby maintaining the fire penetration prevention effect. The coefficient of expansion is calculated using a test sample of the fire-resistant resin composition, the thermally expandable fire-resistant sheet, or the fire-resistant resin molded body using the following formula: (the thickness of the test sample after heating)/(the thickness of the test sample before heating).

The thermally expandable fire-resistant sheet may be laminated with a substrate. The substrate is laminated on one surface or both surfaces of the thermally expandable fire-resistant sheet. The substrate is usually a woven or nonwoven fabric. The fiber used in the woven or nonwoven fabric is preferably, but is not particularly limited to, non-combustible or quasi-noncombustible materials. Preferable examples include glass fiber, ceramic fiber, cellulose fiber, polyester fiber, carbon fiber, graphite fiber, thermosetting resin fiber, and the like.

The non-combustible material as used herein refers to a material that does not undergo combustion for 20 minutes after the initiation of exposure to heat from usual fire (see Article 2 (9) of Building Standards Act and Article 108 (2) (i) of the Enforcement Ordinance of Building Standards Act). Examples include carbon fiber, metal, glass, and the like. The "quasi-noncombustible material" refers to a material that does not undergo combustion for 10 minutes after the initiation of exposure to heat from usual fire (see Article 1 (5) of the Enforcement Ordinance of Building Standards Act).

The fire-resistant resin composition of the present invention and the fire-resistant resin molded body formed from the resin composition can be used to impart fire resistance to building materials. For example, the fire-resistant resin composition of the present invention or the fire-resistant resin molded body formed from the resin composition may be used for fittings, such as windows (including sliding windows, opening windows, and raising-and-lowering windows), *shoji* (paper sliding doors), doors, to (Japanese doors), and *fusuma* (Japanese sliding screens); pillars; and walls such as of steel reinforced concrete, thus enabling reduction or prevention of entering of fire or smoke. For example, as shown in Fig. 1, if the thermally expandable fire-resistant sheets 1 are attached to the main part 12 of a door 10, excellent fire resistance and water resistance are imparted to the main part 12 of the door 10.

Embodiments of the present invention are specifically described above. However, the present invention is not limited to these embodiments, and various modifications may be made based on the technical concept of the present invention.

For example, the configurations, methods, processes, shapes, materials, numerical values, and the like described in the embodiments above are merely examples, and configurations, methods, processes, shapes, materials, numerical values, and the like different from the above may also be used as necessary.

In addition, the configurations, methods, processes, shapes, materials, numerical values, and the like described in the embodiments can be combined with each other without departing from the scope of the present invention.

The present invention may also take the following configurations.

(1) A fire-resistant resin composition comprising:

at least one matrix component selected from the group consisting of resins, elastomers, and rubbers;
a thermally expandable graphite; and
at least one flame retardant selected from the group consisting of lower phosphoric acid salts and melamine derivatives.

(2) The fire-resistant resin composition according to Item (1), further comprising an inorganic filler.
(3) The fire-resistant resin composition according to Item (1) or (2), wherein the thermally expandable graphite is present in an amount of 10 to 200 parts by mass, per 100 parts by mass of the matrix component.
(4) The fire-resistant resin composition according to any one of Items (1) to (3), wherein the at least one flame

retardant is present in an amount of 5 to 400 parts by mass, per 100 parts by mass of the matrix component.

(5) The fire-resistant resin composition according to any one of Items (1) to (3), wherein the at least one flame retardant is present in an amount of 15 to 200 parts by mass, per 100 parts by mass of the matrix component.

(6) The fire-resistant resin composition according to any one of Items (1) to (3), wherein the inorganic filler is present in an amount of 0 to 400 parts by mass, per 100 parts by mass of the matrix component.

(7) The fire-resistant resin composition according to any one of Items (1) to (3), wherein the inorganic filler is present in an amount of 0 to 200 parts by mass, per 100 parts by mass of the matrix component.

(8) The fire-resistant resin composition according to Item (1) or (2), wherein the thermally expandable graphite is present in an amount of 10 to 200 parts by mass, the at least one flame retardant is present in an amount of 5 to 400 parts by mass, and the inorganic filler is present in an amount of 0 to 400 parts by mass, per 100 parts by mass of the matrix component.

(9) The fire-resistant resin composition according to Item (1) or (2), wherein the thermally expandable graphite is present in an amount of 10 to 200 parts by mass, the at least one flame retardant is present in an amount of 15 to 200 parts by mass, and the inorganic filler is present in an amount of 0 to 200 parts by mass, per 100 parts by mass of the matrix component.

(10) The fire-resistant resin composition according to any one of Items (2) and (6) to (9), wherein the mass ratio of the amount of the thermally expandable graphite to the total amount of at least one flame retardant and the inorganic filler is 1:0.5 to 1:10.

(11) The fire-resistant resin composition according to any one of Items (1) to (10), wherein the matrix component is a combination of a thermoplastic resin, a thermosetting resin, or a combination of these resins.

(12) The fire-resistant resin composition according to any one of Items (1) to (11), wherein the matrix component is at least one member selected from the group consisting of polyvinyl chloride resins, chlorinated polyvinyl chloride resins, polyolefin resins, and epoxy resins.

(13) The fire-resistant resin composition according to any one of Items (1) to (12), wherein the matrix component comprises a polyvinyl chloride resin.

(14) The fire-resistant resin composition according to any one of Items (1) to (12), wherein the matrix component is a polyvinyl chloride resin.

(15) The fire-resistant resin composition according to any one of Items (1) to (12), wherein the matrix component comprises a chlorinated polyvinyl chloride resin.

(16) The fire-resistant resin composition according to any one of Items (1) to (12), wherein the matrix component is a chlorinated polyvinyl chloride resin.

(17) The fire-resistant resin composition according to any one of Items (1) to (12), wherein the matrix component comprises an ethylene vinyl acetate copolymer (EVA).

(18) The fire-resistant resin composition according to any one of Items (1) to (12), wherein the matrix component is an ethylene vinyl acetate copolymer (EVA).

(19) The fire-resistant resin composition according to any one of Items (1) to (12), wherein the matrix component comprises a polyolefin resin.

(20) The fire-resistant resin composition according to any one of Items (1) to (12), wherein the matrix component is a polyolefin resin.

(21) The fire-resistant resin composition according to Item (19) or (20), wherein the polyolefin resin comprises a polyester resin.

(22) The fire-resistant resin composition according to Item (19) or (20), wherein the polyolefin resin is a polyester resin.

(23) The fire-resistant resin composition according to any one of Items (1) to (12), wherein the matrix component comprises an epoxy resin.

(24) The fire-resistant resin composition according to any one of Items (1) to (12), wherein the matrix component is an epoxy resin.

(25) The fire-resistant resin composition according to any one of Items (1) to (11), wherein the matrix component comprises an olefin-based elastomer (TPO).

(26) The fire-resistant resin composition according to any one of Items (1) to (11), wherein the matrix component is an olefin-based elastomer (TPO).

(27) The fire-resistant resin composition according to any one of Items (1) to (11), wherein the matrix component comprises an ethylene-propylene-diene rubber (EPDM).

(28) The fire-resistant resin composition according to any one of Items (1) to (11), wherein the matrix component is an ethylene-propylene-diene rubber (EPDM).

(29) The fire-resistant resin composition according to any one of Items (1) to (28), wherein the flame retardant comprises a lower phosphoric acid salt.

(30) The fire-resistant resin composition according to Item (29), wherein the lower phosphoric acid salt is present in an amount of 15 to 200 parts by mass, per 100 parts by mass of the matrix component.

(31) The fire-resistant resin composition according to any one of Items (1) to (28), wherein the flame retardant comprises a melamine derivative.
(32) The fire-resistant resin composition according to Item (31), wherein the melamine derivative is present in an amount of 15 to 200 parts by mass, per 100 parts by mass of the matrix component.
(33) The fire-resistant resin composition according to any one of Items (1) to (28), wherein the flame retardant comprises a lower phosphoric acid salt and a melamine derivative.
(34) The fire-resistant resin composition according to Item (33), wherein the lower phosphoric acid salt and the melamine derivative are present in a total amount of 15 to 200 parts by mass, per 100 parts by mass of the matrix component.
(35) The fire-resistant resin composition according to any one of Items (1) to (34), comprising 25 mass% or less of a phosphorus-containing compound, other than the at least one flame retardant.
(36) The fire-resistant resin composition according to any one of Items (1) to (35), wherein the lower phosphoric acid salt is a non-condensed inorganic phosphoric acid salt.
(37) A fire-resistant resin molded body comprising the fire-resistant resin composition of any one of Items (1) to (36).
(38) The fire-resistant resin molded body according to Item (37), wherein a weight change percentage (%) calculated by the following formula is 3 or less:

Weight change percentage (%) = (the weight of precipitate)/(the weight of the fire-resistant resin molded body before immersion),

wherein the weight of the precipitate is measured by immersing in pure water the fire-resistant resin molded body in the form of a sheet that has a length of 50 mm, a width of 50 mm, and a thickness of 1.5 mm at 60°C for one week, and evaporating and drying the pure water at 90°C.
(39) A fitting comprising the fire-resistant resin molded body of Item (37) or (38).
(40) A thermally expandable fire-resistant sheet comprising the fire-resistant resin composition of any one of Items (1) to (36).
(41) The thermally expandable fire-resistant sheet according to Item (40), wherein a weight change percentage (%) calculated by the following formula is 3 or less:

Weight change percentage (%) = (the weight of precipitate)/(the weight of the thermally expandable fire-resistant sheet before immersion),

wherein the weight of the precipitate is measured by immersing in pure water the thermally expandable fire-resistant sheet that has a length of 50 mm, a width of 50 mm, and a thickness of 1.5 mm at 60°C for one week, and evaporating and drying the pure water at 90°C.
(42) A fitting comprising the fire-resistant resin molded body of Item (40) or (41).

The present invention is detailed below with reference to Examples. However, the present invention is not limited to these Examples.

## Examples

1. Production of Thermally Expandable Fire-resistant Sheets of Examples 1 to 32 and Comparative Examples 1 and 2
Examples 1, 2, 17, and 18

As shown in Tables 1 and 3, compositions containing a predetermined amount of each component were prepared. The following are details of each component:

Epoxy resin (product name: E-807, Mitsubishi Chemical Corporation)
Epoxy resin (product name: FL-079, Mitsubishi Chemical Corporation)
Inorganic filler (calcium carbonate, product name: Whiton BF-300, Bihoku Funka Kogyo Co., Ltd.)
Flame retardant (melamine polyphosphate-melam-melem, product name: Phosmel (registered trademark) 200, Nissan Chemical Industries, Ltd.)
Flame retardant (aluminum phosphite, product name: APA100, Taihei Chemical Industrial Co., Ltd.)

Thermally expandable graphite (product name: CA-60N, Air Water Inc.)

Each of these compositions was kneaded in a planetary stirring machine to obtain a fire-resistant resin composition. Each component is expressed in part by mass. The obtained fire-resistant resin composition was press molded at 25°C for 5 minutes. The resulting fire-resistant resin composition in the form of a sheet was placed in a constant-temperature bath at 100°C for 15 hours, and the sheet was cured, thereby producing a 1.5-mm-thick thermally expandable fire-resistant sheet, which is a molded body.

Example 3, Examples 6 to 16, 23, and 24

As shown in Tables 1, 2, and 4, compositions containing a predetermined amount of each component were prepared. The following are details of each component:

Polyvinyl chloride (PVC) resin (product name: TK-1000, Shin-Etsu Chemical Co., Ltd.)
Chlorinated polyvinyl chloride (CPVC) resin (product name: HA-53F, Tokuyama Sekisui Co. Ltd.)
Plasticizer (product name: DIDP, J-PLUS Co., Ltd.)
Inorganic filler (calcium carbonate, product name: Whiton BF-300, Bihoku Funka Kogyo Co., Ltd.)
Flame retardant (aluminum phosphite, product name: APA100, Taihei Chemical Industrial Co., Ltd.)
Flame retardant (melamine polyphosphate, product name: MPP-A, Sanwa Chemical Co., Ltd.)
Flame retardant (melamine pyrophosphate, product name: BUDIT311, Budenheim)
Flame retardant (melamine orthophosphate, product name: BUDIT310, Budenheim)
Flame retardant (melamine cyanurate, product name: MC-4000, Nissan Chemical Industries, Ltd.)
Thermally expandable graphite (product name: CA-60N, Air Water Inc.)
Thermally expandable graphite (product name: EXP42S160, FujiGraphiteWorks Co. Ltd.)
Thermally expandable graphite (product name: ADT351, ADT)

Each of these compositions was kneaded at 150°C on a kneading roller for 8 minutes, followed by press molding and curing, to thus obtain a 1.5-mm-thick thermally expandable fire-resistant sheet.

Examples 4, 5, and 19 to 22

As shown in Tables 1 and 3, compositions containing a predetermined amount of each component were prepared. The following are details of each component:

Ethylene-vinyl acetate (EVA) resin (product name: Evaflex EV460, Du Pont-Mitsui Polychemicals Co., Ltd.)
Plasticizer (product name: DIDP, J-PLUS Co., Ltd.)
Inorganic filler (calcium carbonate, product name: Whiton BF-300, Bihoku Funka Kogyo Co., Ltd.)
Flame retardant (melamine polyphosphate-melam-melem, product name: Phosmel (registered trademark) 200, Nissan Chemical Industries, Ltd.)
Flame retardant (aluminum phosphite, product name: APA100, Taihei Chemical Industrial Co., Ltd.)
Flame retardant (ammonium polyphosphate, product name: AP422, Clariant)
Thermally expandable graphite (product name: CA-60N, Air Water Inc.)
Thermally expandable graphite (product name: ADT351, ADT)

Each of these compositions was kneaded at 150°C on a kneading roller for 8 minutes, followed by press molding and curing, to thus obtain a 1.5-mm-thick thermally expandable fire-resistant sheet.

Examples 25 to 30

As shown in Table 4, compositions containing a predetermined amount of each component were prepared. The following are details of each component:

Low-density polyethylene resin (product name: UE320, Japan Polyethylene Corporation)
Inorganic filler (calcium carbonate, product name: Whiton BF-300, Bihoku Funka Kogyo Co., Ltd.)
Flame retardant (melamine polyphosphate-melam-melem, product name: Phosmel (registered trademark) 200, Nissan Chemical Industries, Ltd.)
Flame retardant (melamine polyphosphate, product name: MPP-A, Sanwa Chemical Co., Ltd.)
Flame retardant (melamine pyrophosphate, product name: BUDIT311, Budenheim)

Flame retardant (melamine cyanurate, product name: MC-4000, Nissan Chemical Industries, Ltd.)
Flame retardant (aluminum phosphite, product name: APA100, Taihei Chemical Industrial Co., Ltd.)
Thermally expandable graphite (product name: ADT351, ADT)

Each of these compositions was kneaded at 150°C on a kneading roller for 8 minutes, followed by press molding and curing, to thus obtain a 1.5-mm-thick thermally expandable fire-resistant sheet.

Example 31

As shown in Table 4, compositions containing a predetermined amount of each component were prepared. The following are details of each component:

Ethylene-propylene-diene rubber (EPDM) (product name: 3072EPM, Mitsui Chemicals, Inc.)
Inorganic filler (calcium carbonate, product name: Whiton BF-300, Bihoku Funka Kogyo Co., Ltd.)
Flame retardant (aluminum phosphite, product name: APA100, Taihei Chemical Industrial Co., Ltd.)
Thermally expandable graphite (product name: ADT351, ADT)

Each of these compositions was kneaded at 150°C on a kneading roller for 8 minutes, followed by press molding and curing, to thus obtain a 1.5-mm-thick thermally expandable fire-resistant sheet.

Example 32

As shown in Table 4, compositions containing a predetermined amount of each component were prepared. The following are details of each component:

Olefin-based elastomer (TPO) (product name: Milastomer 5020BS, Japan Polyethylene Corporation)
Inorganic filler (calcium carbonate, product name: Whiton BF-300, Bihoku Funka Kogyo Co., Ltd.)
Flame retardant (aluminum phosphite, product name: APA100, Taihei Chemical Industrial Co., Ltd.)
Thermally expandable graphite (product name: ADT351, ADT)

Each of these compositions was kneaded at 150°C on a kneading roller for 8 minutes, followed by press molding and curing, to thus obtain a 1.5-mm-thick thermally expandable fire-resistant sheet.

Comparative Example 1

Instead of using 100 parts by mass of the inorganic filler (calcium carbonate, product name: Whiton BF-300, Bihoku Funka Kogyo Co., Ltd.) and 100 parts by mass of the flame retardant (melamine polyphosphate-melam-melem, product name: Phosmel (registered trademark) 200, Nissan Chemical Industries, Ltd.) as in Example 1, the inorganic filler (calcium carbonate, product name: Whiton BF-300, Bihoku Funka Kogyo Co., Ltd.) was used in an amount of 200 parts by mass, and the amount of the flame retardant (product name: Phosmel (registered trademark) 200, Nissan Chemical Industries, Ltd.) was changed to 0 part by mass. Other components were the same as those used in Example 1. A 1.5-mm-thick thermally expandable fire-resistant sheet was thus obtained as in Example 1.

Comparative Example 2

In Example 1, the amount of the flame retardant (melamine polyphosphate-melam-melem, product name: Phosmel (registered trademark) 200, Nissan Chemical Industries, Ltd.) was changed to 0 parts by mass, and 100 parts by mass of a flame retardant (ammonium polyphosphate, product name: AP422, Clariant) was used instead. Other components were the same as those used in Example 1. A 1.5-mm-thick thermally expandable fire-resistant sheet was thus obtained as in Example 1.

2. Evaluation of the Performance of Thermally Expandable Fire-resistant Sheet

Fire Resistance Test

Each of the fire-resistant sheets (300 mm x 300 mm, thickness: 1.5 mm) of Examples 1 to 32 and Comparative Examples 1 and 2 for evaluation was attached at the center of a reinforced gypsum board GB-F produced by Yoshino Gypsum Co., Ltd. (910 mm x 910 mm, thickness: 12.5 mm) with a staple gun at 9 points in total, i.e., 8 points at the

periphery of the sheet at 150 mm intervals and 1 point at the center of the sheet. The obtained test sample was placed in a vertical furnace (heating was performed vertically with respect to the sample), the heating conditions were adjusted according to the ISO fire curve, and a fire resistance test was performed for 20 minutes. Samples in which the combustion residue of the thermally expandable fire-resistant sheet was still attached without falling off after the fire resistance test for 20 minutes were evaluated to be passing while samples from which the combustion residue of the thermally expandable fire-resistant sheet fell off were evaluated to be failing. Tables 1 to 4 show the results.

Weight Change Percentage

Test samples (length: 50 mm, width: 50 mm, and thickness: 1.5 mm) were produced using each of the fire-resistant sheets of Examples 1 to 32 and Comparative Examples 1 and 2. Five sheets were each immersed in 200 g of pure water. After immersion at 60°C in an air-tight container for one week, the test samples were removed, and pure water was evaporated and dried at 90°C to obtain a precipitate. The weight of the precipitate was measured, and the weight change percentage of the test samples was calculated using the formula below. A smaller weight change percentage represents greater water resistance. Samples with a weight change percentage (%) of less than 3 were evaluated as passing, while those with a weight change percentage (%) of 3 or more were evaluated as failing. Tables 1 to 4 show the results.

Weight change percentage (%) = (the weight of the precipitate)/(the weight of the test sample before immersion) x 100

Although the fire-resistant sheet of Comparative Example 1 showed a small weight change percentage, the fire resistance was insufficient. Although the fire-resistant sheet of Comparative Example 2 excelled fire resistance, the water resistance was insufficient.

In contrast, the fire-resistant sheets of the Examples showed a small weight change percentage, i.e., excellent water resistance, as well as excellent fire resistance.

Table 1

| | | | | | | | | (parts by mass) |
|---|---|---|---|---|---|---|---|---|
| | | Ex.1 | Ex.2 | Ex.3 | Ex.4 | Ex.5 | Comp. Ex. 1 | Comp. Ex. 2 |
| Epoxy resin | E-807 | 60 | 60 | 0 | 0 | 0 | 60 | 60 |
| | FL-079 | 40 | 40 | 0 | 0 | 0 | 40 | 40 |
| PVC | TK-1000 | 0 | 0 | 60 | 0 | 0 | 0 | 0 |
| Plasticizer | DIDP | 0 | 0 | 40 | 0 | 0 | 0 | 0 |
| EVA | Evaflex EV460 | 0 | 0 | 0 | 100 | 100 | 0 | 0 |
| Inorganic filler | Whiton BF-300 | 100 | 100 | 25 | 0 | 0 | 200 | 100 |
| Flame retardant | Phosmel 200 | 100 | 0 | 0 | 0 | 0 | 0 | 0 |
| | APA100 | 0 | 100 | 25 | 50 | 25 | 0 | 0 |
| | AP422 | 0 | 0 | 0 | 0 | 25 | 0 | 100 |
| Thermally expandable graphite | CA60N | 100 | 100 | 50 | 50 | 50 | 100 | 100 |
| Fire resistance test | | Pass | Pass | Pass | Pass | Pass | Fail | Pass |
| Weight change percentage (%) | | 1.32 | 0.45 | 0.81 | 0.67 | 2.67 | 0.12 | 4.5 |

Table 2

(parts by mass)

| | | Ex.6 | Ex.7 | Ex.8 | Ex.9 | Ex.10 | Ex.11 | Ex.12 | Ex.13 | Ex.14 | Ex.15 | Ex.16 |
|---|---|---|---|---|---|---|---|---|---|---|---|---|
| PVC | TK-1000 | 60 | 60 | 60 | 60 | 60 | 60 | 60 | 60 | 60 | 35 | 40 |
| Plasticizer | DIDP | 40 | 40 | 40 | 40 | 40 | 40 | 40 | 40 | 40 | 35 | 40 |
| Inorganic filler | Whiton BF-300 | 35 | 35 | 35 | 35 | 40 | 40 | 38 | 100 | 100 | 50 | 50 |
| Flame retardant | Phosmel 200 | 0 | 0 | 0 | 0 | 0 | 10 | 2 | 0 | 100 | 0 | 0 |
| | MPP-A | 15 | 0 | 0 | 0 | 0 | 0 | 0 | 0 | 0 | 0 | 0 |
| | BUDIT311 | 0 | 15 | 0 | 0 | 0 | 0 | 0 | 0 | 0 | 0 | 0 |
| | BUDIT310 | 0 | 0 | 15 | 0 | 0 | 0 | 0 | 0 | 0 | 0 | 0 |
| | MC-4000 | 0 | 0 | 0 | 15 | 0 | 0 | 0 | 0 | 0 | 30 | 20 |
| | APA100 | 0 | 0 | 0 | 0 | 10 | 0 | 10 | 100 | 0 | 0 | 0 |
| Thermally expandable graphite | CA60N | 50 | 50 | 50 | 50 | 50 | 50 | 50 | 0 | 0 | 50 | 50 |
| | EXP42S160 | 0 | 0 | 0 | 0 | 50 | 50 | 50 | 0 | 0 | 0 | 0 |
| | ADT351 | 0 | 0 | 0 | 0 | 0 | 0 | 0 | 100 | 100 | 0 | 0 |
| Fire resistance test | | Pass | Pass | Pass | Pass | Pass | Pass | Pass | Pass | Pass | Pass | Pass |
| Weight change percentage (%) | | 1.76 | 2.32 | 2.21 | 1.43 | 0.45 | 0.51 | 0.62 | 2.45 | 2.78 | 2.51 | 1.86 |

Table 3

| | | | | | | | |
|---|---|---|---|---|---|---|---|
| (parts by mass) | | | | | | | |
| | | Ex.17 | Ex.18 | Ex.19 | Ex.20 | Ex.21 | Ex. 22 |
| Epoxy resin | E-807 | 60 | 60 | 0 | 0 | 0 | 0 |
| | FL-079 | 40 | 40 | 0 | 0 | 0 | 0 |
| EVA | Evaflex EV460 | 0 | 0 | 100 | 100 | 100 | 100 |
| Inorganic filler | Whiton BF-300 | 0 | 0 | 0 | 0 | 100 | 100 |
| Flame retardant | Phosmel 200 | 0 | 200 | 0 | 200 | 100 | 0 |
| | APA100 | 200 | 0 | 200 | 0 | 0 | 100 |
| Thermally expandable graphite | CA60N | 100 | 100 | 0 | 0 | 0 | 0 |
| | EXP42S160 | 0 | 0 | 0 | 0 | 0 | 0 |
| | ADT351 | 0 | 0 | 100 | 100 | 100 | 100 |
| Fire resistance test | | Pass | Pass | Pass | Pass | Pass | Pass |
| Weight change percentage (%) | | 1.12 | 2.64 | 1.88 | 2.12 | 0.99 | 1.11 |

Table 4

| | | | | | | | | | | | |
|---|---|---|---|---|---|---|---|---|---|---|---|
| | | | | | | | | | | | (parts by mass) |
| | | Ex. 23 | Ex.24 | Ex.25 | Ex.26 | Ex.27 | Ex.28 | Ex.29 | Ex.30 | Ex. 31 | Ex.32 |
| CPVC | HA-53F | 60 | 60 | 0 | 0 | 0 | 0 | 0 | 0 | 0 | 0 |
| Plasticizer | DIDP | 40 | 40 | 0 | 0 | 0 | 0 | 0 | 0 | 0 | 0 |
| Low-density polyethylene | UE320 | 0 | 0 | 30 | 30 | 30 | 30 | 100 | 100 | 0 | 0 |
| EPDM | 3072EPM | 0 | 0 | 0 | 0 | 0 | 0 | 0 | 0 | 100 | 0 |
| TPO | Milastomer 5020BS | 0 | 0 | 0 | 0 | 0 | 0 | 0 | 0 | 0 | 100 |
| Inorganic filler | Whiton BF-300 | 30 | 10 | 20 | 20 | 20 | 20 | 100 | 0 | 100 | 100 |
| Flame retardant | Phosmel 200 | 0 | 0 | 0 | 30 | 0 | 0 | 0 | 0 | 0 | 0 |
| | MPP-A | 0 | 0 | 0 | 0 | 30 | 0 | 0 | 0 | 0 | 0 |
| | BUDIT311 | 0 | 0 | 0 | 0 | 0 | 30 | 0 | 0 | 0 | 0 |
| | MC-4000 | 0 | 0 | 30 | 0 | 0 | 0 | 0 | 0 | 0 | 0 |
| | APA100 | 20 | 40 | 0 | 0 | 0 | 0 | 100 | 200 | 100 | 100 |
| | EXP42S160 | 50 | 50 | 0 | 0 | 0 | 0 | 0 | 0 | 0 | 0 |
| | ADT351 | 0 | 0 | 20 | 20 | 20 | 20 | 100 | 100 | 100 | 100 |
| Fire resistance test | | Pass | Pass | Pass | Pass | Pass | Pass | Pass | Pass | Pass | Pass |
| Weight change percentage (%) | | 0.66 | 1.41 | 1.65 | 1.21 | 2.18 | 2.66 | 0.91 | 1.66 | 1.34 | 1.12 |

## Claims

1. A fire-resistant resin composition comprising:

   at least one matrix component selected from the group consisting of resins, elastomers and rubbers;
   a thermally expandable graphite; and
   at least one flame retardant selected from the group consisting of lower phosphoric acid salts and melamine derivatives.

2. The fire-resistant resin composition according to claim 1, further comprising an inorganic filler.

3. The fire-resistant resin composition according to claim 1 or 2, wherein the thermally expandable graphite is present in an amount of 10 to 200 parts by mass, the at least one flame retardant is present in an amount of 5 to 400 parts by mass, and the inorganic filler is present in an amount of 0 to 400 parts by mass, per 100 parts by mass of the matrix component.

4. The fire-resistant resin composition according to claim 2 or 3, wherein the mass ratio of the amount of the thermally expandable graphite to the total amount of the at least one flame retardant and the inorganic filler is 1:0.5 to 1:10.

5. The fire-resistant resin composition according to any one of claims 1 to 4, wherein the at least one matrix component is at least one member selected from the group consisting of polyvinyl chloride resins, chlorinated polyvinyl chloride resins, polyolefin resins, and epoxy resins.

6. The fire-resistant resin composition according to any one of claims 1 to 5, comprising 25% by mass or less of a phosphorus-containing compound other than the at least one flame retardant.

7. A fire-resistant resin molded body comprising the fire-resistant resin composition of any one of claims 1 to 6.

8. A thermally expandable fire-resistant sheet comprising the fire-resistant resin composition of any one of claims 1 to 6.

9. A fitting comprising the fire-resistant resin molded body of claim 7 or the thermally expandable fire-resistant sheet of claim 8.

Fig. 1

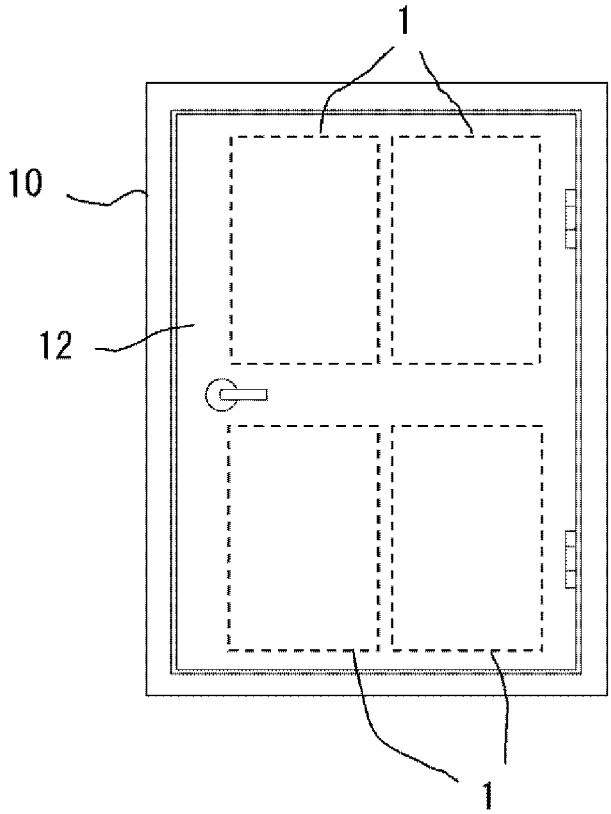

## INTERNATIONAL SEARCH REPORT

International application No.
PCT/JP2017/045453

A. CLASSIFICATION OF SUBJECT MATTER
Int.Cl. C08L101/00 (2006.01)i, C08K3/04(2006.01)i, C08K3/32(2006.01)i, C08K5/3492(2006.01)i, C08L21/00(2006.01)i, E04B1/94(2006.01)i, E06B5/16(2006.01)i

According to International Patent Classification (IPC) or to both national classification and IPC

B. FIELDS SEARCHED

Minimum documentation searched (classification system followed by classification symbols)
Int.Cl. C08L101/00, C08K3/04, C08K3/32, C08K5/3492, C08L21/00, E04B1/94, E06B5/16

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
CA/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X | JP 2006-348228 A (SHIN-ETSU CHEMICAL CO., LTD.) 28 December 2006, claims, paragraph [0041], examples (Family: none) | 1-9 |
| X<br>A | WO 2016/031910 A1 (SEKISUI CHEMICAL CO., LTD.) 03 March 2016, claims, examples & US 2017/0253691 A1, claims, examples & EP 3187549 A1 & AU 2015309847 A & CN 106604972 A & KR 10-2017-0045220 A | 1-3, 5-9<br>4 |
| X<br>A | JP 2006-274134 A (DENKI KAGAKU KOGYO KABUSHIKI KAISHA, CRK KK) 12 October 2006, claims, examples (Family: none) | 1-4, 6, 7<br>5 |
| X<br>A | JP 2016-151001 A (SEKISUI CHEMICAL CO., LTD.) 22 August 2016, claims, examples (Family: none) | 1, 2, 5, 7-9<br>3, 4 |
| P, X | WO 2017/126654 A1 (SEKISUI CHEMICAL CO., LTD.) 27 July 2017, claims, examples & JP 2017-128712 A & JP 6200622 B1 & JP 6225287 B1 | 1-9 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 January 2018 (22.01.2018) | 30 January 2018 (30.01.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2009138184 A